# FASCICULE DE BREVET EUROPEEN

(11) **EP 0 735 790 B1**
(45) Date de publication et mention de la délivrance du brevet: **02.07.2003**
(21) Numéro de dépôt: 96400634.0
(22) Date de dépôt: 26.03.1996
(51) Int. Cl.: H04Q 7/32, H04Q 7/38

(54) **Dispositif pour autoriser la sélection d'une cellule, à l'état de veille, dans un terminal de radiocommunications mobiles pour réseau cellulaire**
Einrichtung zur Zellselektionsgenehmigung im Wartezustand in einem mobilen Funkübertragungsendgerät eines zellularen Netzwerkes
Mobile radio communication terminal device for enabling a cell selection in a standby state in a cellular network

(30) Priorité: 29.03.1995 FR 9503705
(43) Date de publication de la demande: 02.10.1996
(73) Titulaire: ALCATEL, 75008 Paris (FR)
(72) Inventeur: Pinault, Francis, 92270 Bois Colombes (FR); Jouin, Christophe c/o Alcatel Mobile Phones, 92707 Colombes Cedex (FR)
(74) Mandataire: El Manouni, Josiane

(56) Documents cités:
- WO-A-94/13069
- WO-A-94/26055
- US-A- 5 357 561

## Description

La présente invention concerne d'une manière générale les radiocommunications mobiles.

La présente invention concerne plus particulièrement un terminal de radiocommunications mobiles pour réseau cellulaire, tel que notamment le réseau GSM, et plus particulièrement encore un dispositif pour autoriser la sélection d'une cellule, à l'état de veille, dans un tel terminal.

Pour recevoir des appels à l'état de veille, un tel terminal doit remplir un certain nombre de fonctions telles que en particulier l'écoute de messages dits de "paging", qui sont diffusés dans chaque cellule sur une fréquence dite fréquence balise caractéristique de cette cellule.

Pour écouter ces messages le terminal sélectionne en permanence une cellule de rattachement, en l'occurrence la meilleure, c'est-à-dire celle pour laquelle la qualité de transmission est la plus élevée.

Une grandeur représentative de cette qualité de transmission est donc définie, qui tient compte en particulier du niveau de signal reçu par le terminal dans une cellule sur la fréquence balise de cette cellule, cette fréquence balise étant à cet effet diffusée en permanence dans cette cellule.

Pour le cas du système GSM par exemple, on trouvera une description plus détaillée de cette grandeur, appelée "C1", notamment aux pages 453 à 455 du livre de Michel MOULY et Marie-Bernadette PAUTET : "The GSM System For Mobile Communications" (Europe Media Duplication-1992).

Brièvement, pour réaliser ladite sélection de cellule dans le système GSM, le terminal calcule cette grandeur C1 pour chacune de diverses cellules environnantes, élimine celles de ces cellules pour lesquelles est obtenue une valeur de C₁ inférieure à un seuil donné, dit ici seuil de sélection de cellule, déterminé pour garantir une certaine qualité de service à l'utilisateur une fois qu'une communication concernant ce terminal est établie dans la cellule ainsi sélectionnée, et retient celle des cellules ainsi obtenues pour laquelle la valeur C₁ est la plus élevée. Ceci est décrit notamment dans le document WO-A-94 26055.

Il apparaît ainsi que lorsqu'aucune valeur de C₁ supérieure à ce seuil de sélection de cellule ne peut être trouvée, du fait de niveaux de réception insuffisants, aucune cellule ne peut être sélectionnée et ce terminal ne peut donc pas accéder au réseau pour établir des communications.

La présente invention a essentiellement pour but de réduire le nombre de situations où un terminal ne peut ainsi accéder au réseau du fait qu'aucune cellule ne peut être sélectionnée, ou, en d'autres termes, d'élargir dans une certaine mesure la zone de couverture de ce réseau.

La présente invention a ainsi pour objet un dispositif pour autoriser la sélection d'une cellule, à l'état de veille, dans un terminal de radiocommunications mobiles pour réseau cellulaire, ce dispositif comportant des moyens pour calculer une grandeur représentative de la qualité de transmission relativement à cette cellule, des moyens pour déterminer si cette grandeur a une valeur suffisante par rapport à une valeur de référence déterminée, dite seuil de sélection de cellule, et si oui pour autoriser, relativement à cette cellule, l'établissement d'une communication intéressant ce terminal, et ce dispositif étant essentiellement caractérisé en ce qu'il comporte en outre des moyens pour déterminer, dans le cas où cette grandeur n'a pas une valeur suffisante par rapport audit seuil de sélection de cellule, si cette grandeur a une valeur suffisante par rapport à une autre valeur de référence déterminée, dite seuil de désélection de cellule, inférieure au seuil de sélection de cellule, et, si oui, pour autoriser, relativement à cette cellule, une partie, voire la totalité, des fonctions relatives à l'établissement d'une communication intéressant ce terminal.

Suivant une autre caractéristique de l'invention, ce dispositif comporte en outre des moyens pour comparer entre elles celles des diverses grandeurs ainsi obtenues relativement à diverses cellules environnantes, qui ont une valeur suffisante par rapport audit seuil de désélection de cellule, en vue de déterminer la meilleure de ces cellules, relativement à laquelle sera autorisée une partie, voire la totalité, des fonctions relatives à l'établissement d'une communication.

Suivant une autre caractéristique de l'invention, ladite partie des fonctions relatives à l'établissement d'une communication est celle permettant l'élaboration d'un signal d'appel entrant dans le cas d'un appel entrant intéressant ce terminal.

Suivant une autre caractéristique de l'invention, ladite partie des fonctions relatives à l'établissement d'une communication est celle permettant l'écoute de canaux, notamment de messages courts, diffusés sur une fréquence dite fréquence balise caractéristique de ladite cellule.

Suivant une autre caractéristique de l'invention, ce dispositif comporte en outre des moyens permettant, dans le cas où une partie, voire la totalité, des fonctions relatives à l'établissement d'une communication intéressant ce terminal est ainsi autorisée, de commander l'élaboration d'un signal destiné à alerter l'utilisateur quant au risque d'une qualité de service non optimale.

La présente invention est notamment applicable au cas de terminaux susceptibles de passer, soit au moment où ils quittent l'état de veille pour passer dans un état dit de communication, soit à un autre moment, d'un mode de fonctionnement dit dégradé dans lequel les niveaux de réception sont trop faibles pour autoriser la sélection d'une cellule sur la base du seuil de sélection de cellule, à un mode de fonctionnement dit non dégradé, dans lequel ces niveaux de réception sont au contraire suffisants pour autoriser cette sélection. A titre d'exemple de mode dégradé on citera le cas d'un terminal portatif rangé, à l'état de veille, dans la poche de l'utilisateur, avec son antenne repliée, et à titre d'exemple de mode non dégradé, le cas où ce terminal est tenu à la main, avec son antenne dépliée.

Ainsi, dans cet exemple d'application, on pourra par exemple, avec la présente invention, et contrairement à ce qui est le cas avec l'état de la technique tel que rappelé plus haut, autoriser l'élaboration d'un signal d'appel entrant dans le cas d'un appel entrant intéressant ce terminal, alors que ce terminal est dans le mode dégradé. L'utilisateur, alerté par ce signal d'appel entrant, peut alors sortir le terminal de sa poche, déplier l'antenne, et, le mode non dégradé étant alors retrouvé, la communication peut avoir lieu de façon normale.

Suivant un autre exemple, le mode dégradé pourrait correspondre au cas où, au cours de ses déplacements, le terminal rencontre provisoirement des conditions de propagation radioélectriques défavorables.

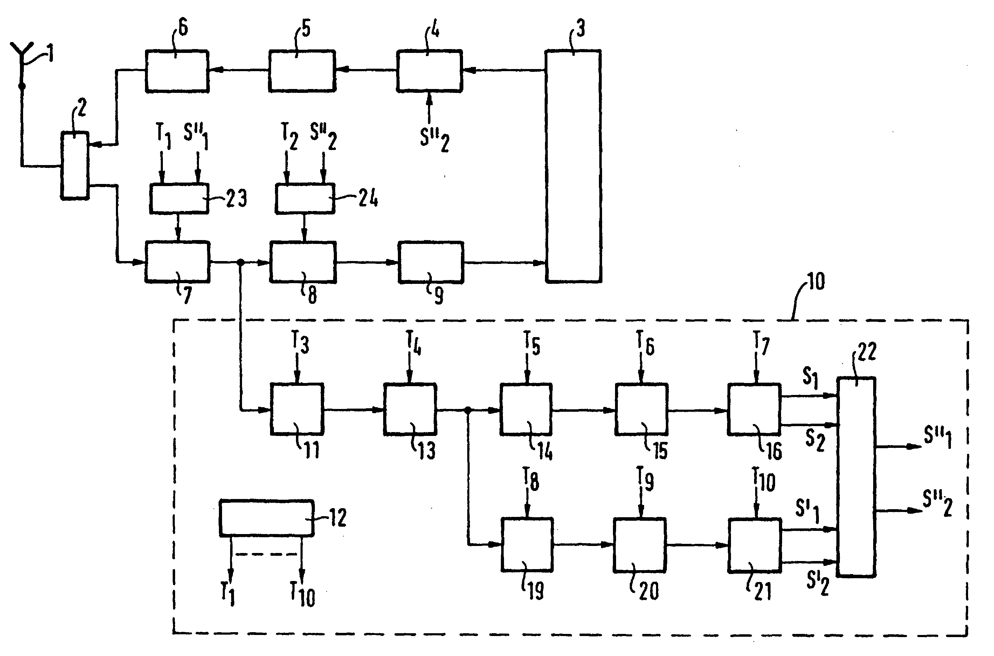

D'autres objets et caractéristiques de la présente invention apparaîtront à la lecture de la description suivante d'un exemple de réalisation, faite en relation avec la figure ci-annexée représentant un schéma synoptique d'un exemple de réalisation d'un dispositif selon l'invention, ainsi que des éléments d'un terminal de radiocommunications mobiles nécessaires à son fonctionnement.

Ce schéma comporte, de façon connue, entre une antenne 1 et un duplexeur 2 d'une part, et des moyens de relation homme-machine 3 de ce terminal d'autre part :
- une voie dite montante comportant :
   . des moyens 4 de détection d'activation de certains organes des moyens de relation homme-machine, tels que notamment le clavier de ce terminal, et d'élaboration de messages correspondants,
   . des moyens 5 d'élaboration, à partir de ces messages, de canaux de signalisation, communs ou dédiés, montants,
   . des moyens d'émission 6,
- une voie dite descendante comportant :
   . des moyens de réception 7,
   . des moyens 8 d'écoute de canaux de signalisation, commun ou dédiés, descendants,
   . des moyens 9 d'élaboration de signaux correspondants, nécessaires à l'activation de certains organes des moyens de relation homme-machine, tel qu'une sonnerie, un écran...etc.

Sur ce schéma sont en outre illustrés des moyens 10 de sélection de cellule à l'état de veille.

Les moyens 10 de sélection de cellule à l'état de veille comportent, de façon connue :
- des moyens 11 de mesure de niveau des signaux issus des moyens de réception 7, pour une fréquence d'accord donnée de ces moyens de réception, correspondant à la fréquence balise de l'une de diverses cellules environnantes, cette fréquence balise étant indiquée par un signal de commande T₁ appliqué à l'entrée de commande correspondante des moyens de réception 7 et issu d'un séquenceur 12 réalisant le séquencement des opérations de sélection de cellule, à l'état de veille,
- des moyens, 13, pour calculer une grandeur notée C₁, représentative de la qualité de transmission relativement à la cellule pour laquelle un niveau est ainsi mesuré par les moyens 11,
- des moyens, 14, pour détecter si la grandeur ainsi calculée est supérieure à un seuil dit de sélection de cellule,
- des moyens, 15, pour mémoriser les valeurs C₁ ainsi détectées supérieures à ce seuil de sélection de cellule,
- des moyens, 16, pour détecter la valeur maximale parmi les valeurs ainsi mémorisées.

Le seuil de sélection de cellule est déterminé pour garantir une certaine qualité de service, Q₁, à l'utilisateur, une fois qu'une communication concernant ce terminal est établie dans la cellule ainsi sélectionnée par les moyens 16.

Les moyens 16 fournissent un premier signal de commande, S₁, permettant de commander l'accord de la fréquence locale des moyens de réception 7 sur la fréquence balise de la cellule sélectionnée par les moyens 16. Les moyens 16 fournissent également un deuxième signal de commande, S₂, permettant de commander l'écoute, par les moyens 8, de canaux communs, notamment de "paging", diffusés sur la fréquence balise de la cellule sélectionnée par les moyens 16.

Suivant l'invention, les moyens 10 de sélection de cellule à l'état de veille comportent en outre :
- des moyens 19 pour détecter si la grandeur C₁ calculée par les moyens 13 est supérieure à un seuil dit de désélection de cellule, inférieur au seuil de sélection de cellule,
- des moyens 20 pour mémoriser les valeurs ainsi détectées supérieures à ce seuil de désélection de cellule,
- des moyens 21 pour détecter la valeur maximale parmi les valeurs ainsi mémorisées.

Le seuil de désélection de cellule est déterminé pour garantir une certaine qualité de service, Q₂, en l'occurrence inférieure à la qualité de service Q₁.

Les moyens 21 fournissent un premier signal de commande, S'₁, permettant de commander l'accord de la fréquence locale des moyens de réception 7 sur la fréquence balise de la cellule sélectionnée par les moyens 12.

Les moyens 21 fournissent en outre un deuxième signal de commande S'₂, utilisé pour commander l'écoute, par les moyens 8, de canaux communs, notamment de "paging", diffusés sur la fréquence balise de la cellule sélectionnée par les moyens 21.

Les signaux S₁, S₂, S'₁, et S'₂ sont appliqués à un circuit 22 fournissant des signaux S"₁ et S"₂ égaux respectivement aux signaux S₁ et S₂ lorsque ces signaux indiquent qu'une cellule peut être sélectionnée sur la base du seuil de sélection de cellule, ou aux signaux S'₁ et S'₂ lorsque ces signaux indiquent qu'aucune cellule ne peut être sélectionnée sur la base du seuil de sélection de cellule.

Dans le cas où aucune cellule ne peut être sélectionnée, ni sur la base du seuil de sélection de cellule, ni sur la base du seuil de désélection de cellule, les signaux S"₁ et S"₂ permettent en outre de ne pas commander les moyens de réception 7 et les moyens 8 d'écoute de canaux communs, notamment de "paging".

Le processus de sélection de cellule tel que décrit ci-dessus est continuellement renouvelé (éventuellement parallèlement à l'écoute des canaux de "paging" diffusés sur la fréquence balise de la cellule sélectionnée) par l'intermédiaire de commandes assurées par le séquenceur 12. Les moyens 8 ainsi que les moyens 11, 13, 14, 15, 16, 19, 20 et 21 sont, pour cela, comme les moyens 7, commandés par des signaux de commande, respectivement T₂ à T₁₀, issus du séquenceur 12.

La sélection entre les signaux T₁ et S"₁ appliqués aux moyens de réception 7 est assurée par un circuit 23, et la sélection entre les signaux T₂ et S"₂ appliqués aux moyens 8 d'écoute de canaux communs est assuré par un circuit 24.

Un des signaux issus du circuit 22, par exemple le signal S"₂, est par ailleurs, dans cet exemple de réalisation, appliqué à une entrée de commande des moyens 4 de détection d'activation des moyens de relation homme-machine et d'élaboration de messages correspondants. Cette commande est en l'occurrence une commande de blocage de l'élaboration de message habituellement élaboré par ces moyens 4 sur détection d'acceptation d'appel par l'utilisateur. L'élaboration d'un tel message est ici autorisée dans le cas où une cellule peut être sélectionnée sur la base du seuil de sélection de cellule, et interdite dans le cas où aucune cellule ne peut être sélectionnée sur la base du seuil de sélection de cellule et où une cellule peut être sélectionnée sur la base du seuil de désélection de cellule.

Cet exemple de réalisation correspond plus particulièrement à l'exemple d'application mentionné plus haut, c'est-à-dire au cas où, alerté par un signal d'appel entrant, l'utilisateur fait passer le terminal d'un mode de fonctionnement dégradé à un mode de fonctionnement non dégradé, par exemple en le sortant de sa poche et en dépliant son antenne.

Le processus de sélection étant continuellement renouvelé, une cellule pourra alors être trouvée sur la base du seuil de sélection de cellule et la communication pourra alors avoir lieu de façon normale, c'est-à-dire avec la qualité de service Q₁.

L'exemple décrit ci-dessus correspond donc plus particulièrement au cas où ladite partie des fonctions relatives à l'établissement d'une communication est celle permettant l'élaboration d'un signal d'appel entrant.

D'autres exemples seraient néanmoins possibles; par exemple ladite partie des fonctions relatives à l'établissement d'une communication pourrait consister dans l'écoute de canaux communs, notamment de messages courts, diffusés sur la fréquence balise de la cellule considérée.

Par ailleurs, rien n'interdit, dans les différents exemples d'application possibles, d'autoriser la totalité desdites fonctions, même si la qualité de service risque alors de ne pas être optimale.

On pourra alors commander l'élaboration d'un signal destiné à alerter l'utilisateur quant à un risque de qualité de service non optimale, par exemple sous la forme de l'inscription d'un message sur l'écran du terminal.

Dans l'exemple illustré une telle commande pourrait être obtenue en appliquant un des signaux issus du circuit 22, par exemple, le signal S"₂, aux moyens 9 de commande d'activation des moyens de relation homme-machine.

## Revendications

1. Dispositif pour autoriser la sélection d'une cellule, à l'état de veille, dans un terminal de radiocommunications mobiles pour réseau cellulaire, dispositif comportant des moyens (13) pour calculer une grandeur représentative de la qualité de transmission relativement cette cellule, des moyens (14) pour déterminer si cette grandeur a une valeur suffisante par rapport à une valeur de référence déterminée, dite seuil de sélection de cellule, et si oui pour autoriser, relativement à cette cellule, l'établissement d'une communication intéressant ce terminal, **caractérisé en ce qu'**il comporte en outre des moyens (19, 22) pour déterminer, dans le cas où ladite grandeur n'a pas une valeur suffisante par rapport audit seuil de sélection de cellule, si cette grandeur a une valeur suffisante par rapport à une autre valeur de référence déterminée, dite seuil de désélection de cellule, inférieure au seuil de sélection de cellule, et, si oui, pour autoriser, relativement à cette cellule, une partie, voire la totalité, des fonctions relatives à l'établissement d'une communication intéressant ce terminal.

2. Dispositif selon la revendication 1, **caractérisé en ce qu'**il comporte en outre des moyens (20, 21) pour comparer entre elles celles des diverses grandeurs ainsi obtenues, qui ont une valeur suffisante par rapport audit seuil de désélection de cellule, en vue de déterminer la meilleure de ces cellules, relativement à laquelle sera autorisée une partie, voire la totalité, des fonctions relatives à l'établissement d'une communication intéressant ce terminal.

3. Dispositif selon l'une des revendications 1 et 2, **caractérisé en ce que** ladite partie des fonctions relatives à l'établissement d'une communication est celle permettant l'élaboration d'un signal d'appel entrant dans le cas d'un signal d'appel entrant intéressant ce terminal.

4. Dispositif selon l'une des revendications 1 et 2, **caractérisé en ce que** ladite partie des fonctions relatives à l'établissement d'une communication est celle permettant l'écoute de canaux communs, notamment de messages courts, diffusés sur une fréquence dite fréquence balise caractéristique de ladite cellule.

5. Dispositif selon l'une des revendications 1 à 4, **caractérisé en ce qu'**il comporte en outre des moyens (19, 22) permettant, dans le cas où une partie, voire la totalité, des fonctions relatives à l'établissement d'une communication intéressant ce terminal est ainsi autorisée, de commander l'élaboration d'un signal destiné à alerter l'utilisateur quant au risque d'une qualité de service non optimale.

## Patentansprüche

1. Vorrichtung zum Genehmigen der Auswahl einer Zelle im Wartezustand in einem Mobilfunk-Endgerät für ein zellulares Netz, wobei die Vorrichtung Mittel (13) zum Berechnen einer für die Übertragungsqualität bezüglich dieser Zelle repräsentativen Größe, Mittel (14) zum Festlegen, ob diese Größe einen ausreichenden Wert in Bezug auf einen festgelegten Referenzwert, als Zellenauswahlschwelle bezeichnet, hat, und, wenn ja, zum Genehmigen der Etablierung einer dieses Endgerät betreffenden Kommunikation bezüglich dieser Zelle, **dadurch gekennzeichnet, dass** sie ferner Mittel (19, 22) umfasst, um in dem Fall, wo die Größe in Bezug auf diese Zellenauswahlschwelle keinen ausreichenden Wert hat, festzulegen, ob diese Größe einen ausreichenden Wert in Bezug auf eine andere festgelegte Referenzgröße, als Zellenabwahlschwelle bezeichnet, hat, die niedriger als die Zellenauswahlschwelle ist, und, wenn ja, bezüglich dieser Zelle einen Teil oder die Gesamtheit der auf die Etablierung einer dieses Endgerät betreffenden Kommunikation bezogenen Funktionen zu genehmigen.

2. Vorrichtung nach Anspruch 1, **dadurch gekennzeichnet, dass** sie ferner Mittel (20, 21) zum Vergleichen untereinander derjenigen der diversen so erhaltenen Größen umfasst, die einen ausreichenden Wert in Bezug auf die Zellenabwahlschwelle haben, um die beste dieser Zellen festzulegen, in Bezug auf die ein Teil oder die Gesamtheit der die Etablierung einer dieses Endgerät betreffenden Kommunikation bezogenen Funktionen genehmigt wird.

3. Vorrichtung nach einem der Ansprüche 1 und 2, **dadurch gekennzeichnet, dass** der Teil der die Etablierung einer Kommunikation betreffenden Funktionen derjenige ist, der die Erzeugung eines Ruf-Eingangs-Signals im Falle eines dieses Endgerät betreffenden Ruf-Eingangs-Signals ermöglicht.

4. Vorrichtung nach einem der Ansprüche 1 und 2, **dadurch gekennzeichnet, dass** der Teil der die Etablierung einer Kommunikation betreffenden Funktionen derjenige ist, der das Abhören von gemeinsamen Kanälen, insbesondere von Kurznachrichten, ermöglicht, die auf einer sogenannten Bakenfrequenz verbreitet werden, die für die Zelle charakteristisch ist.

5. Vorrichtung nach einem der Ansprüche 1 bis 4, **dadurch gekennzeichnet, dass** sie ferner Mittel (19, 22) umfasst, die in dem Fall, dass ein Teil oder die Gesamtheit der die Etablierung einer dieses Endgerät betreffenden Kommunikation betreffenden Funktionen genehmigt wird, es ermöglichen, die Erzeugung eines Signals zu steuern, das dazu dient, den Benutzer vor der Gefahr einer nicht optimalen Dienstqualität zu warnen.

## Claims

1. Device for authorizing the selection of a cell in a cellular mobile radio network terminal in the standby state, including means (13) for calculating a parameter representative of the transmission quality with reference to said cell, means (14) for determining if said parameter has a sufficient value relative to a cell selection threshold, and if it has to authorize, in relation to said cell, setting up of a call involving said terminal, **characterized in that** it further includes means (19, 22) for determining, if said parameter does not have a sufficient value relative to said cell selection threshold, if it has a sufficient value relative to a cell deselection threshold, less than the cell selection threshold, and if it has, to authorize, in relation to said cell, some or possibly all of the functions relating to setting up of a call involving said terminal.

2. Device according to claim 1 **characterized in that** it further includes means (20, 21) for comparing the various parameters obtained in this way which have a sufficient value relative to said cell deselection threshold in order to determine the best of said cells, relative to which some or even all of said functions relating to the setting up of a call involving said terminal will be authorized.

3. Device according to either claim 1 or claim 2 **characterized in that** said part of the functions relating to call set-up is that part enabling production of a paging signal in the case of an incoming call signal relevant to said terminal.

4. Device according to either claim 1 or claim 2 **characterized in that** said part of the functions relating to call set-up is that part enabling listening to common channels, including short messages, broadcast on a broadcast control channel characteristic of said cell.

5. Device according to any of claims 1 to 4 **characterized in that** it further includes means (19, 22) commanding the production of a signal to alert the user to the risk of a non-optimal grade of service when some or even all of the functions relating to the setting up of a call involving said terminal are authorized in this way.
